# EUROPÄISCHE PATENTSCHRIFT

(11) **EP 0 889 467 B1**
(45) Veröffentlichungstag und Bekanntmachung des Hinweises auf die Patenterteilung: **19.10.2005**
(21) Anmeldenummer: 98111489.5
(22) Anmeldetag: 23.06.1998
(51) Int. Cl.: G11B 7/26, B65H 15/00, B65G 49/00, B65G 61/00

(54) **Verfahren und Vorrichtung zum Dekorieren von flachen selbsttragenden Objekten**
Method and apparatus for decorating flat self-supporting objects
Procédé et appareil de décoration d'objets plats autoportants

(30) Priorität: 01.07.1997 DE 19728029
(43) Veröffentlichungstag der Anmeldung: 07.01.1999
(73) Patentinhaber: Werner Kammann Maschinenfabrik GmbH & Co. KG, 32257 Bünde (DE)
(72) Erfinder: Redeker, Ralf Rudi, 33615 Bielefeld (DE); Rodefeld, Dietrich, 49176 Hilter (DE)
(74) Vertreter: Koepsell, Helmut

(56) Entgegenhaltungen:
- EP-A- 0 398 799
- US-A- 5 232 505
- PATENT ABSTRACTS OF JAPAN vol. 018, no. 061 (C-1160), 2. Februar 1994 (1994-02-02) & JP 05 277427 A (ORIGIN ELECTRIC CO LTD), 26. Oktober 1993 (1993-10-26)

## Beschreibung

Die Erfindung betrifft ein Verfahren und eine Vorrichtung zum Dekorieren von flachen selbsttragenden Objekten gemäß dem Oberbegriff des Anspruches 1 bzw. dem des Anspruches 14.

Bestimmte Objekte, insbesondere flache selbsttragende Objekte, beispielsweise CDs, erfordern eine beidseitige Bedruckung. Aus Kostengründen wird angestrebt, die Objekte in einem Durchlauf durch die Maschine auf beiden Seiten zu bedrucken. Dies setzt aber im allgemeinen voraus, daß die Objekte, nachdem sie auf einer Seite bedruckt - oder in anderer Weise dekoriert - worden sind, gewendet werden, um die zweite Seite den Druckwerken und ggf. auch anderen Behandlungseinrichtungen, z. B. Trocknern, zugänglich zu machen.

US-A-5 232 505 zeigt eine Vorrichtung und Prozess zur Herstellung von optischen Platten. Die optischen Platten werden mit mechanischen Greifern zwischen verschiedenen Behandlungsstationen übertragen. EP-A-396 799 zeigt eine Vorrichtung zur Herstellung von optischen Platten mit Verwendung von einem Schwenkarm mit Saugeinrichtung. Dieser Schwenkarm wird zur Übertragung von Platten zwischen die verschiedenen Behandlungsstationen und danach Wenden der Platten verwendet. JP-A-05 277427 zeigt einen Greifer zum Wenden der optischen Platten während des Herstellungsprozesses.

Der Erfindung liegt die Aufgabe zugrunde, Verfahren und Vorrichtung der einleitend beschriebenen Art, also insbesondere ein Druckverfahren und eine dafür benutzte Vorrichtung, so auszugestalten, daß es ohne großen Aufwand möglich ist, die zu dekorierenden Objekte während des Durchlaufens durch die Maschine zu wenden, wobei es sich im allgemeinen um eine Verschwenkung um 180° handeln wird, so daß vor dem Wendevorgang die eine Seite und nach dem Wendevorgang die andere Seite des Objektes zugänglich ist. Dabei sollen die Besonderheiten des zu bedruckenden oder sonstwie zu behandelnden Guts, also beispielsweise von CDs, berücksichtigt werden können, damit bei dem mit dem Wenden verbundenen Manipulieren der Objekte keine Beschädigung derselben eintritt oder andere die Eigenschaften der Objekte beeinträchtigende Folgen eintreten.

Diese Aufgabe wird mit den im Kennzeichen des Anspruches 1 bzw. des Anspruches 14 angegebenen Merkmalen gelöst.

Weitere Merkmale der Erfindung ergeben sich aus den Unteransprüchen.

Die Erfindung gibt somit die Möglichkeit, daß nach Durchlaufen eines oder mehrerer Druckwerke und/oder anderer Behandlungsstationen zwecks Bedrucken der ersten Seite des Objektes dieses aus der Aufnahme herauszunehmen und nach dem Wendevorgang in eine Aufnahme zurückzulegen, wobei letztere bei gleichzeitigem Vortransport der Aufnahme identisch sein kann mit der Aufnahme, aus welcher das Objekt zuvor herausgenommen worden war. Die dazu benutzte Vorrichtung läßt sich dahingehend zusammenfassen, daß sie mit zwei Armen versehen ist, die entlang einer gekrümmten Bahn und ggf. linear bewegbar sind, wobei jeder Arm mit einer Saugeinrichtung versehen ist und der erste Arm das Objekt aus einer Aufnahme des Transportmittels für die Objekte herausnimmt und in eine Zwischenposition bewegt, in deren Verlauf das Objekt eine Verschwenkung erfährt. Spätestens in der Zwischenposition wird die Saugeinrichtung des zweiten Armes an der zweiten Seite des Objektes zur Anlage gebracht derart, daß nach Verringerung der Saugwirkung an der Saugeinrichtung des ersten Armes das Objekt vom zweiten Arm übernommen und von diesem im Zuge einer weiteren Schwenkbewegung, in deren Verlauf der Wendevorgang komplettiert wird, in eine Halterung gebracht wird, bei der es sich um die Halterung handeln kann, aus der das Objekt zuvor durch den ersten Arm herausgenommen worden war.

Eine so ausgebildete Wendevorrichtung hat keinen großen Platzbedarf. Die Verbindung der Objekte mit den Schwenkarmen durch ein Saugmittel gewährleistet ein schonendes Manipulieren der Objekte. Aufgrund des relativ geringen Platzbedarfes besteht auch die Möglichkeit, bereits vorhandene Maschinen mit der Wendevorrichtung nachträglich zu versehen.

In der Zeichnung ist ein Ausführungsbeispiel der Erfindung dargestellt. Es zeigen:
- Fig. 1: im Schema die Draufsicht einer Siebdruckmaschine,
- Fig. 2: im Schema die Vorderansicht der Wendeeinrichtung mit den zugehörigen Antriebs- und Übertragungsmitteln,
- Fig. 3 -5: jeweils eine der Fig. 2 entsprechende Ansicht der eigentlichen Wendeeinrichtung in unterschiedlichen Positionen der zusammenwirkenden Teile,

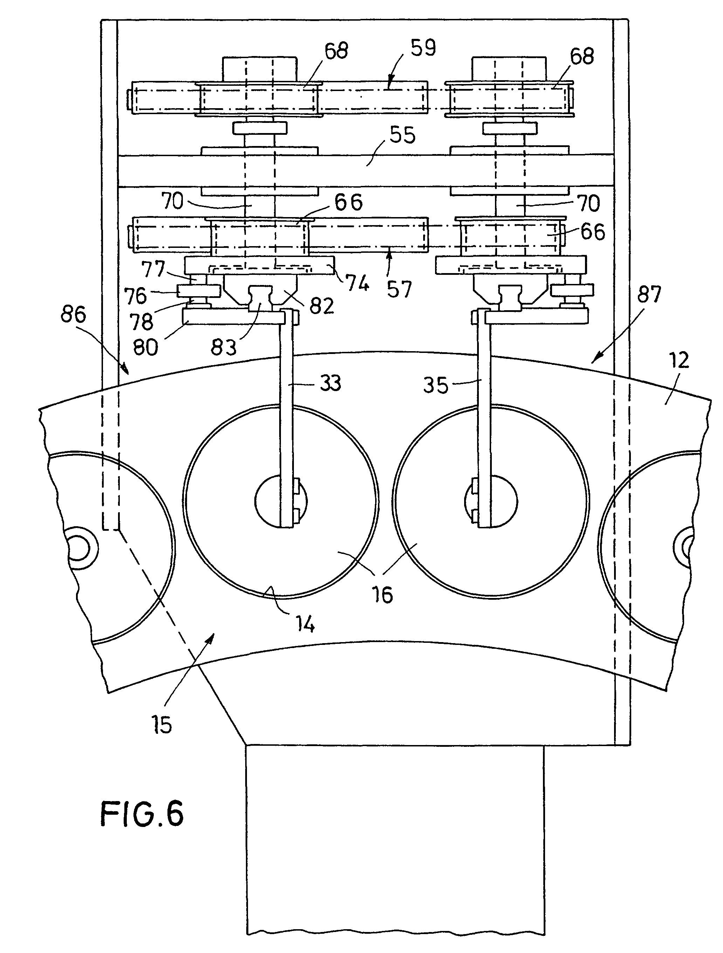

- Fig. 6: eine Ansicht des Transporttisches und eines Teils der zugehörigen Übertragungsmittel in Richtung der Pfeile VI-VI der Fig. 2,

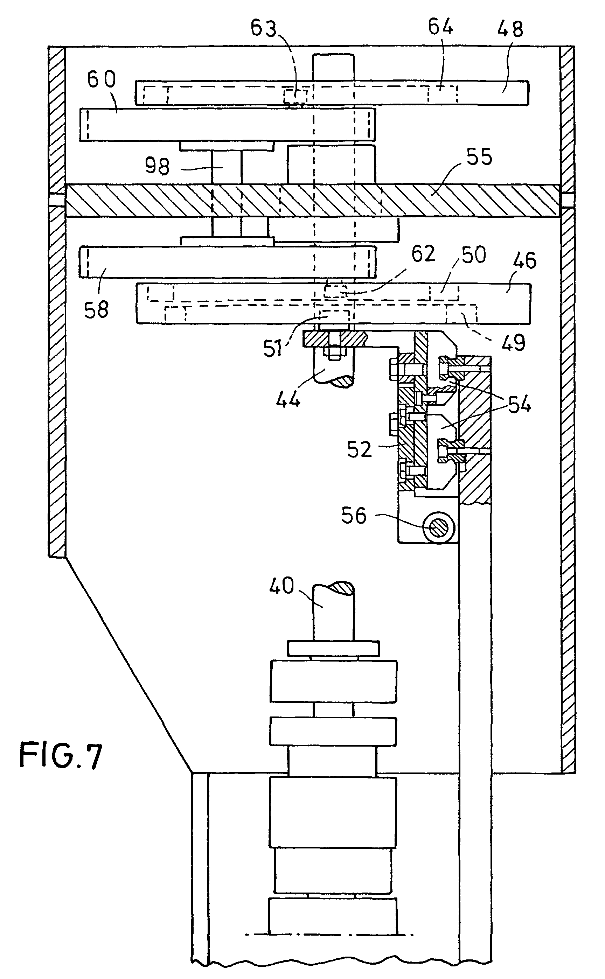

- Fig. 7: eine Ansicht in Richtung der Pfeile VII-VII der Fig. 2,

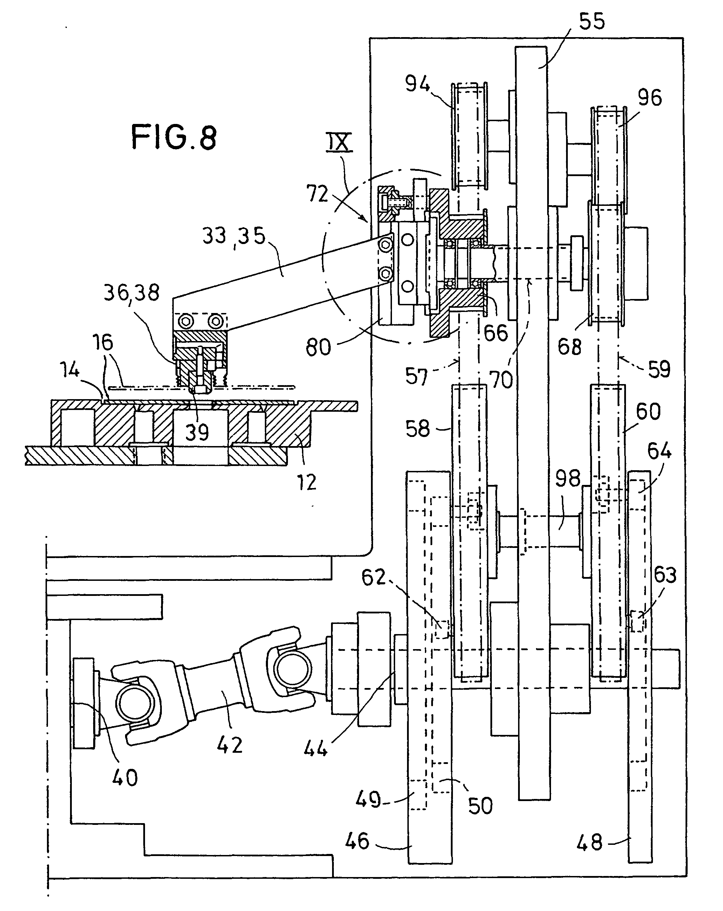

- Fig. 8: eine Ansicht etwa in Richtung der Pfeile VIII-VIII der Fig. 2,

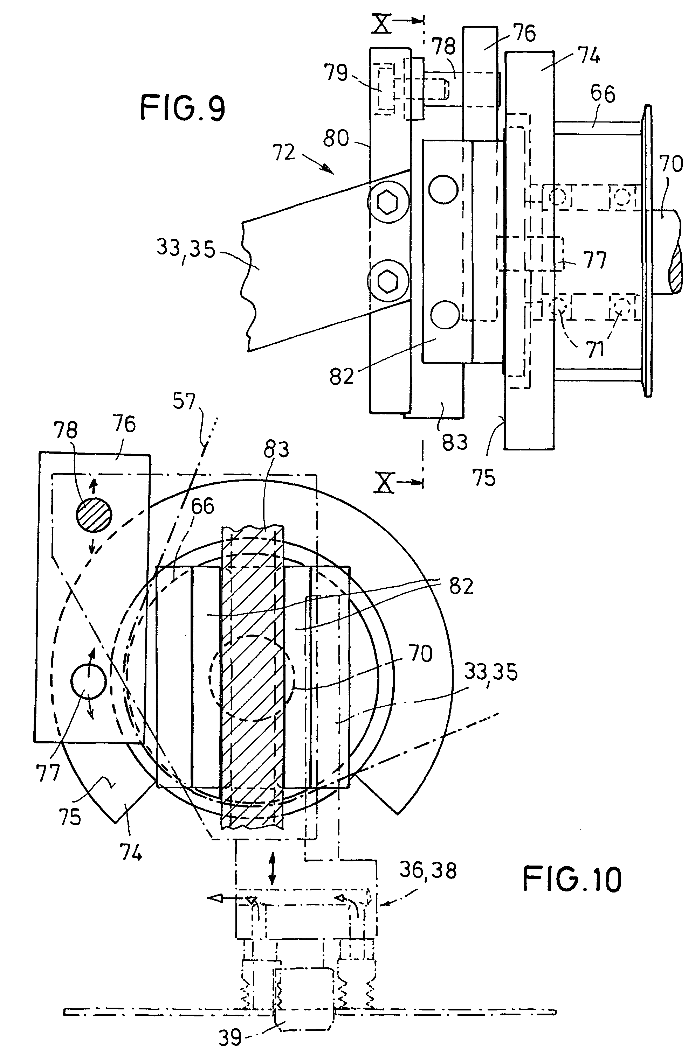

- Fig. 9: einen Ausschnitt aus Fig. 8 in größerem Maßstab,
- Fig.10: eine an sich etwa in Richtung der Pfeile X-X der Fig. 9.

Das in der Zeichnung dargestellte Ausführungsbeispiel einer Siebdruckmaschine 10 ist mit einem schrittweise umlaufenden Transporttisch 12 versehen, der oberseitig in Halterungen 15 angeordnete Aufnahmen 14 für die zu bedruckenden Objekte 16 trägt, bei denen es sich beispielsweise um CDs handeln kann. Die Objekte 16 werden in der Eingabestation 18 in die jeweils dort befindliche Aufnahme 14 eingelegt und dann in Richtung des Pfeiles 20 schrittweise entlang einer kreisförmigen Transportbahn zunächst durch Druckstationen 21, 22, 23 geführt, in welcher die in den Aufnahmen 14 jeweils befindlichen Objekte aufeinanderfolgend auf der oberen Seite bedruckt werden. Jeder Druckstation ist eine Trocknungsstation 25, 26, 27 nachgeschaltet.

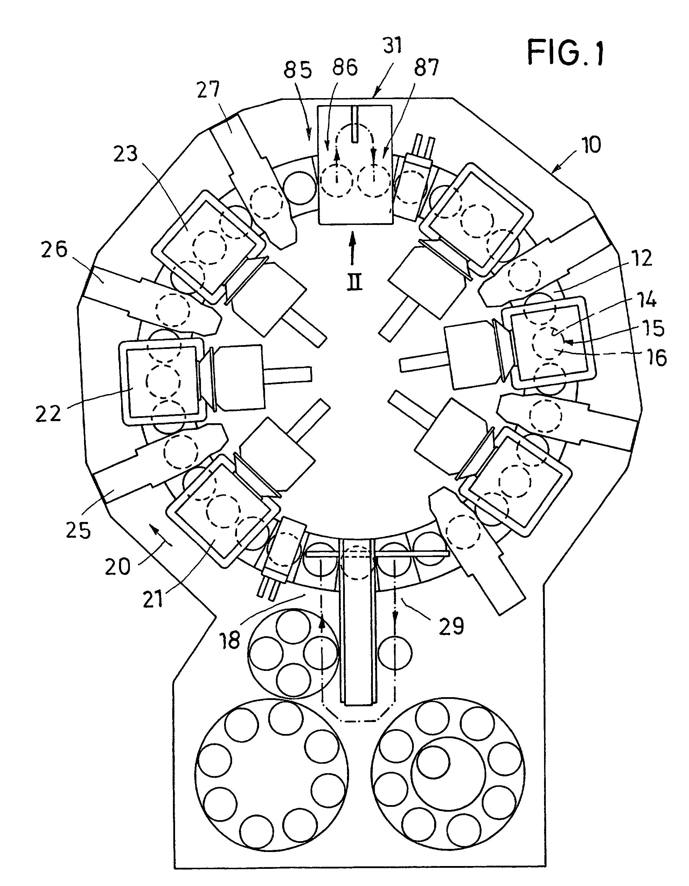

Nach Durchlaufen des halben Transportweges zwischen der Eingabestation 18 und einer Station 29, in welcher die bedruckten Objekte aus der Vorrichtung herausgeführt werden, sind die auf einer Seite bedruckten Objekte zu wenden, also um 180° zu verschwenken, damit deren zweite Seite, die beim Durchgang durch die Stationen 18 - 27 unten lag, oben zu liegen kommt und somit zum Bedrucken usw. von oben zugänglich ist. Das Bedrucken dieser zweiten Seite erfolgt dann in den Druckstationen, die in der in Fig. 1 rechts befindlichen Hälfte der Siebdruckmaschine 10 angeordnet sind. Die Behandlungsstationen der rechten Seite können denen der linken Seite entsprechen, wenngleich dies nicht erforderlich ist. Die Vorrichtung 31, in welcher die Objekte 16 umgedreht werden, liegt demzufolge bei dem Ausführungsbeispiel gemäß Fig. 1 in einem Bereich der Transportbahn, der dem die Eingabestation 18 und die Entnahmestation 29 aufweisenden Bereich gegenüberliegt.

Die Wendevorrichtung 31 ist mit zwei Schwenkeinrichtungen 32, 34 versehen, von denen jede einen Arm 33 bzw. 35 aufweist. Jeder Arm trägt an seinem freien Ende einen Saugkopf 36 bzw. 38. Der Saugkopf 36 der ersten Schwenkeinrichtung 32 ist an seinem stirnseitigen Ende mit einem Dorn 39 versehen, der in eine im Objekt 16 angeordnete mittige Öffnung einführbar ist, deren Innendurchmesser dem Außendurchmesser des Dornes 39 entspricht, so daß letzterer das Objekt zum Maschinenrahmen ausrichtet und in dieser ausgerichteten Position hält, solange das Objekt 16 mit dem Saugkopf 36 verbunden bleibt. Jeder Saugkopf ist mit wenigstens einer Öffnung versehen, die an eine Unterdruckquelle anschließbar ist. Wie im einzelnen der Saugkopf oder das die Saugöffnungen aufweisende freie Ende des Armes 33 bzw. 35 ausgebildet ist, hat keine besondere Bedeutung, solange gewährleistet ist, daß der Unterdruck ein Anhaften eines Objektes am Saugkopf des Armes bewirkt. Bei dem in der Zeichnung dargestellten Ausführungsbeispiel sind die Saugöffnungen um den Dorn 39 herum angeordnet.

Der Antrieb der beiden Schwenkeinrichtungen 32, 34 wird von einer Welle 40 abgeleitet, die vom Zentralantrieb der Maschine, der unter anderem auch den schrittweisen Vortransport des Transporttisches 12 bewirkt, angetrieben wird. Mit der Welle 40 ist über ein Kardangelenk 42 eine Welle 44 gekuppelt, mit welcher zwei Kurvenscheiben 46 bzw. 48 fest verbunden sind. Die Kurvenscheibe 46 ist beidseitig mit jeweils einer Kurve 49 bzw. 50 versehen. Mit der Kurve 49 wirkt eine Kurvenrolle 51 zusammen, die von einem Schlitten 52 getragen wird, der auf zwei parallelen vertikalen Führungen 54 ver-schiebbar ist. Der Schlitten 52 trägt einen Dorn 56, welcher die Ausrichtung des Objektes zum Maschinenrahmen und damit zu den von diesem getragenen Druckwerken bewirkt, nachdem es in noch zu beschreibender Weise gewendet worden ist.

Die Wand 55, in welcher die Welle 44 rotierbar gelagert ist, dient auch zur Lagerung einer Achse 98, auf welcher zwei Zahnräder 58, 60 rotierbar gelagert sind. Jedes dieser Zahnräder ist mit einer Kurvenrolle 62 bzw. 63 versehen, von denen die Kurvenrolle 62 mit der Kurve 50 in der Kurvenscheibe 46 zusammenwirkt. Die Kurvenrolle 63 des Zahnrades 60 wirkt mit einer Kurve 64 in der zweiten Kurvenscheibe 48 zusammen.

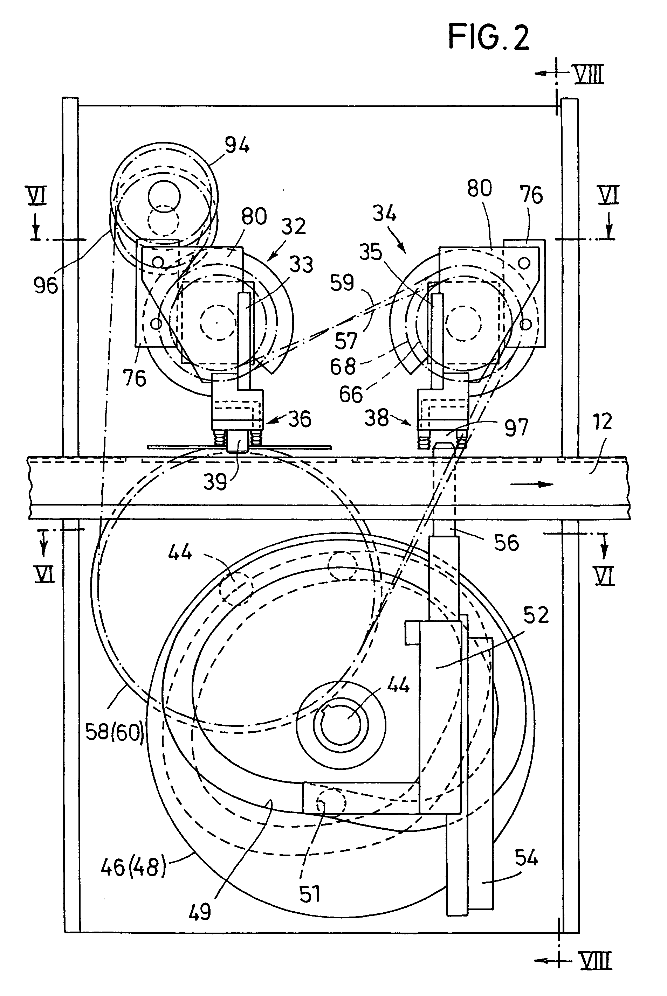

Jedes der beiden Zahnräder 58, 60 treibt einen beidseitig gezahnten Zahnriemen 57 bzw. 59 an, der mit den Antriebsübertragungsmitteln beider Schwenkeinrichtungen 32 bzw. 34 zusammenwirkt, wie dies insbesondere Fig. 2 zeigt. Jedem der beiden Zahnriemen 57, 59 ist eine Spannrolle 94 bzw. 96 zugeordnet, die der Führung und Einstellung der richtigen Spannung des jeweiligen Zahnriemens dient. Demzufolge sind diese Spannrollen 94 und 96 auch verschiebbar an der Wand 55 angebracht.

Der Zahnriemen 57 ist mit dem Ritzel 66 und der Zahnriemen 59 mit dem Ritzel 68 der Schwenkeinrichtung 32 bzw. 34 in Eingriff, um diese in Abhängigkeit von den hin- und hergehenden Bewegungen der Zahnräder 58, 60 in Rotation zu versetzen.

Die folgende Beschreibung einer Schwenkeinrichtung gilt für beide Schwenkeinrichtungen 32, 34. Das Ritzel 68 ist auf einer Welle 70 befestigt, die an ihrem dem Ritzel 68 abgekehrten Ende eine Halterung 72 für den jeweiligen Arm 32 bzw. 34 trägt. Auf beide Ritzel 66 und 68 wird von den Zahnrädern 58 bzw. 60 eine hin- und hergehende Bewegung übertragen mit der Folge, daß über das Ritzel 68 eine entsprechend hin- und hergehende Rotationsbewegung von 90° um die Achse der Welle 70 auf die Halterung 72 übertragen wird.

Das Ritzel 66 ist unter Zwischenschaltung eines Wälzlagers 71 drehbar auf der Welle 70 gelagert und an seiner dem jeweiligen Arm 33 bzw. 35 zugekehrten Seite mit einem Flansch 74 versehen, an dessen Stirnfläche 75, also exzentrisch zur Welle 70, eine Kurbelstange 76 mittels eines Bolzens 77 schwenkbar angebracht ist. In einem Abstand vom Bolzen 77 ist die Kurbelstange 76 über einen ebenfalls rotierbar in ihr gelagerten Bolzen 78 mit einer Platte 80 verbunden, die ihrerseits den Arm 33 bzw. 35 trägt. Die Befestigung der Platte 80 am Bolzen 78 erfolgt über einen Schraubenbolzen 79, der in die Stirnseite des dazu mit Innengewinde versehenen Bolzens 78 eingeschraubt ist und die Platte 80 am Bolzen 78 festklemmt.

An der der Platte 80 zugekehrten Stirnseite der Welle 70 ist diese mit einer radialen Linearführung 82 versehen, die an den Drehbewegungen der Welle 70 teilnimmt. An der den Schwenkarm 33 bzw. 34 tragenden Platte 80 ist an der der Linearführung 82 zugekehrten Seite ein Schienenabschnitt 83 befestigt, der formschlüssig von der Linearführung 82 umfaßt und relativ zu dieser längsverschiebbar ist. Die Platte 80 wird somit über die Linearführung 82 und die Kurbelstange 76 von der Welle 70 getragen.

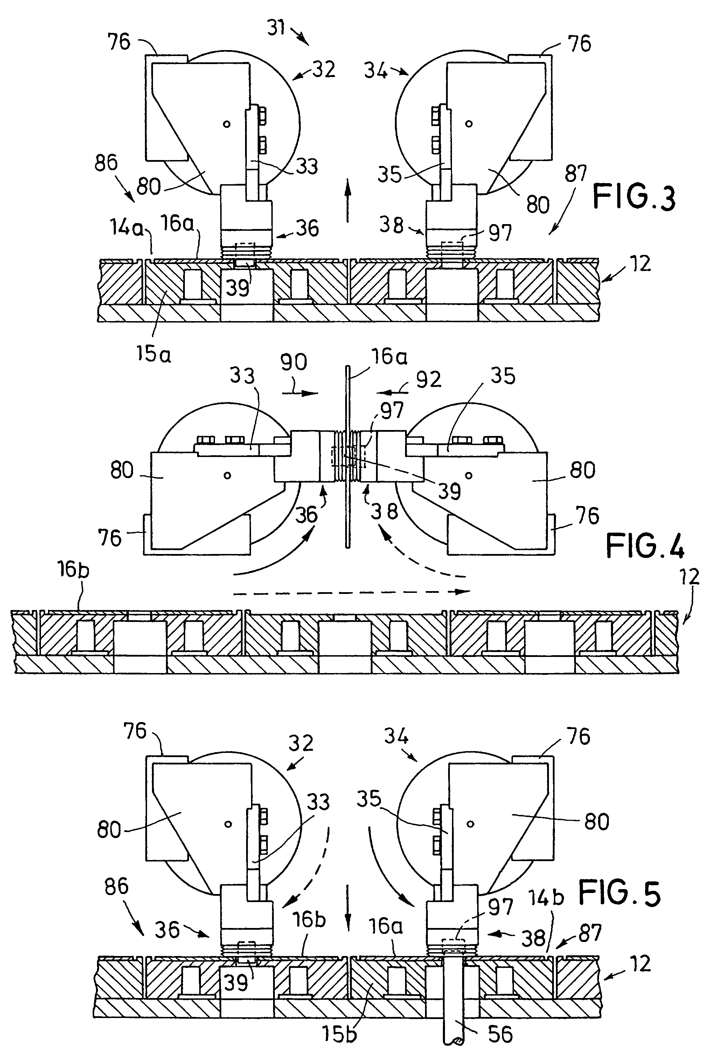

Die beiden Arme 32, 34 werden durch den gemeinsamen Antrieb synchron, jedoch teilweise gegenläufig bewegt, wie sich insbesondere aus den Fig. 3 - 5 ergibt.

Im folgenden wird das Wenden eines Objektes in der Wendevorrichtung 31 beschrieben. Aus der Trocknungsstation 27 (Fig. 1) gelangt das einseitig bedruckte Objekte im nächsten Transportschritt zunächst in eine Station 85, in welcher das aufgebrachte Druckbild geprüft wird, um danach im nächsten Transportschritt in die Station 86 zu gelangen, welcher die Schwenkeinrichtung 32 der Wendeeinrichtung 31 zugeordnet ist. Während des Transportschrittes sind die Arme 33, 35 der Schwenkeinrichtungen angehoben, so daß sie sich oberhalb des Bewegungsbereiches der Halterungen 15 mit den Aufnahmen 14 befinden. Nach Beendigung des Transportschrittes werden die beiden Arme 33 und 35 vertikal nach unten bewegt, so daß sie in die in Fig. 3 dargestellte Position gelangen, in welcher der Saugkopf 36 des Armes 33 an dem in der Aufnahme 14a der Halterung 15a befindlichen Objekt 16a oberseitig zur Anlage kommt, wobei der Dorn 39 in die mittige Öffnung des Objektes 16 eingreift, so daß dieses ausgerichtet wird oder in seiner relativ zum Maschinenrahmen ausgerichteten Position gehalten wird. Spätestens zu diesem Zeitpunkt wird der Unterdruck im Saugkopf 36 wirksam, so daß beim darauffolgenden Anheben der beiden Arme 33, 35 das in der Aufnahme 14a befindliche Objekt 16a durch den Arm 33 aus der Aufnahme 14a zunächst nach oben bewegt wird. Dies wird durch eine Rotationsbewegung des jeweiligen Ritzels 66 der beiden Schwenkeinrichtungen 32, 34 bewirkt, die eine Drehbewegung des mit dem Ritzel 66 jeweils fest verbundenen Flansches 74 zur Folge hat. Dies führt zu einer entsprechenden Mitnahme der Kurbelstange 76, die etwas angehoben wird und zugleich um den oberen Bolzen 78 eine geringfügige Verschwenkung erfährt. Das Ausmaß der von den Ritzeln 66 ausgeführten Rotationsbewegung ist relativ klein und beträgt beispielsweise 20°. Die vertikal nach oben gerichtete Bewegungskomponente der Kurbelstange 76 hat zwangsläufig eine entsprechende Verschiebung der Platte 80 zur Folge, die aufgrund der zu diesem Zeitpunkt vertikal verlaufenden Linearführung 82, 83 nur eine lineare Bewegung ausführen kann, welche das vorerwähnte Anheben der beiden Arme 33, 35 bewirkt. Am Saugkopf 38 des Armes 35 ist bei der Aufwärtsbewegung kein Objekt vorhanden, so daß demzufolge der Unterdruck am Saugkopf 38 in dieser Bewegungsphase abgeschaltet sein kann. Nachdem das vom Arm 33 getragene Objekt sich in einem Abstand von beispielsweise 10 - 20 mm oberhalb der Aufnahme 14a befindet, kann das Objekt 16a aus seiner im wesentlichen horizontalen Lage um 90° in eine Position verschwenkt werden, in welcher seine Hauptebene im wesentlichen vertikal verläuft, also parallel zu der in Fig. 4 dargestellten Position, ohne daß das Objekt 16a im Zuge der Schwenkbewegung gegen die darunter befindliche Halterung 15a stößt. Zur Durchführung dieser von beiden Armen 33, 35 gegenläufig erfolgenden Schwenkbewegungen wird die Welle 70 jeder Schwenkeinrichtung 32, 34 über das Zahnrad 60 der gemeinsamen Antriebseinrichtung und das jeweilige Ritzel 68 in Rotation versetzt mit der Folge, daß die vorerwähnte Verschwenkung der von den Teilen 82, 83, 80 und 33 bzw. 35 jeweils gebildeten Einheit mit dem zugehörigen Saugkopf um einen Winkel von 90° in die Position gemäß Fig. 4 erfolgt, wobei der Saugkopf 38 des Armes 35 kein Objekt trägt. Im Anschluß an diese Schwenkbewegung erfolgen gegeneinander gerichtete lineare Horizontalverschiebungen der Schwenkeinrichtungen in Richtung der Pfeile 90 bzw. 92 in eine mittlere Position. Diese linearen Horizontalverschiebungen werden wiederum durch eine entsprechende kurze Rotationsbewegung des jeweiligen Ritzels 66 bewirkt, die, da die Verschiebung innerhalb der Linearführung 82 der vorangegangenen Linearverschiebung zwecks Herausnahme des Objektes 16a aus der Ausnahme 14a entgegengerichtet ist, in entgegengesetzter Richtung zur vorangegangenen Rotationsbewegung erfolgt. In der in Fig. 4 dargestellten Position liegen die Saugköpfe 36, 38 beider Arme 33, 35 am Objekt 16a an. In dieser Position greift der Dorn 39 des Saugkopfes 36 durch die Öffnung des Objekts in eine am Saugkopf 38 befindliche Ausnehmung 97 ein, so daß unabhängig vom jeweils wirksamen Saugdruck das Objekt 16 in der Position gemäß Fig. 4 jedenfalls formschlüssig vom Dorn 39 gehalten wird.

Spätestens nach Erreichen der in Fig. 4 dargestellten Position wird der Unterdruck auch am Saugkopf 38 wirksam, so daß das Objekt 16a jetzt auch von diesem Saugkopf gehalten wird. Es ist dann möglich, den am Saugkopf 36 wirksamen Unterdruck zumindest soweit zu reduzieren, daß bei dem anschließenden Auseinanderbewegen der beiden Arme 33, 35 und damit der Saugköpfe 36 bzw. 38 in Richtung der Pfeile 92 bzw. 90 das Objekt 16a am Saugkopf 38 haftet und von diesem mitgenommen und dabei auf dem Dorn 39 gleitend von diesem abgezogen wird. Gleichzeitig kommt der Dorn 39 außer Eingriff mit der Ausnehmung 97 im Saugkopf 36. Diese lineare Bewegung der beiden Arme 33, 35 wird wiederum durch entsprechende Betätigung der Kurbelstangen 76 über das jeweilige Ritzel 66 bewirkt. Am Ende der in Richtung der Pfeile 92 bzw. 90 erfolgenden im wesentlichen horizontalen Linearbewegung oder diese ggf. auch überlagernd werden die beiden Arme 33, 35 gegenläufig um 90° in ihre Ausgangslage zurückverschwenkt mit der Folge, daß das nunmehr vom Kopf 38 getragene, einseitig bedruckte Objekt 16a wiederum in eine horizontale Lage gelangt, bei der jedoch die zweite noch zu bedruckende oder sonstwie zu dekorierende Fläche oben liegt, so daß das Objekt 16a gegenüber der in Fig. 3 dargestellten Ausgangsposition eine Verschwenkung um insgesamt 180° erfahren hat. Am Ende der Schwenkbewegung erfolgt dann eine gemeinsame vertikale Abwärtsbewegung der beiden Arme 33, 35, an deren Ende sich das vom Saugkopf 38 des Armes 35 getragene Objekt in der Aufnahme 14a befindet, aus welcher es zuvor durch den Saugkopf 36 des Armes 33 herausgenommen worden war. Dies setzt voraus, daß während der vorbeschriebenen Vorgänge, während welcher das Objekt 16a um 180° verschwenkt wurde, der Transporttisch 12 mit den Halterungen 15 und den Aufnahmen 14 um einen Transportschritt vorbewegt worden war.

Während der Abwärtsbewegung der beiden Arme 33, 35 gelangt der leere Saugkopf 36 der Schwenkeinrichtung 32 zur Anlage am Objekt 16b, das während des Transportschrittes in die Station 86 gelangt war und dann während des nächsten Arbeitszyklus' in der vorbeschriebenen Weise gewendet und in der Station 87 wieder in der Aufnahme 14b der dann in der Station 87 befindlichen Halterung 15b abgelegt zu werden.

In der letzten Phase der Abwärtsbewegung der Arme 33, 35 und damit des Saugkopfes 38 mit dem daran gehaltenen Objekt 16a und/oder danach wird der Zentrierdorn 56, welcher der Station 87 zugeordnet ist, in welcher das Objekt wieder in die Aufnahme eingelegt wird, nach oben in die in Fig. 5 dargestellte Position verschoben, in welcher der obere Endabschnitt des Dornes 56 durch das mittige Loch im Objekt 16a hindurchragt. Da der Außendurchmesser des Dornes 56 dem Innendurchmesser des Loches im Objekt entspricht, wird das Objekt zum Dorn 56 und damit auch zum Maschinenrahmen ausgerichtet. Auch der Dorn 56 ist an seinem freien Ende konisch sich verjüngend ausgebildet, um das Einfahren des Dornes in die Öffnung des Objektes zu erleichtern. Der Dorn 56 greift, wenn er seine obere Endstellung einnimmt, in die an der Stirnseite des Saugkopfes angeordnete Ausnehmung 97 ein, solange der Saugkopf 38 noch am Objekt 16a anliegt.

Aufgrund der Tatsache, daß die Bewegung des Dornes 56 von derselben Kurvenscheibe 46 abgeleitet wird, die auch die Bewegung des Armes 35 und damit des Saugkopfes 38 nach unten bewirkt, ist gewährleistet, daß die Bewegung des Kopfes und damit des Objekts 16a einerseits und die des Dornes 56 andererseits zwangsläufig in Abhängigkeit voneinander gesteuert werden.

Der auf den Saugkopf 38 einwirkende Unterdruck kann abgeschaltet oder reduziert werden, sobald das Objekt 16a in der Aufnahme 14a abgelegt worden ist. In der Aufnahme 14a wirkt ebenfalls ein Unterdruck auf das in dieser befindliche Objekt ein, der letzteres in seiner Lage hält, die durch den Dorn 56 bestimmt worden ist. Der auf das in der jeweiligen Aufnahme befindliche Objekt von unten einwirkende Unterdruck, der das Objekt in der Aufnahme fixiert, kann in der Station 86 abgeschaltet werden, damit das Objekt durch den Arm 33 ohne Schwierigkeiten aus der Aufnahme herausgehoben werden kann. In der folgenden Station 87 kann der Unterdruck in der Aufnahme wieder wirksam sein, um das Objekt in der durch den Dorn 56 ausgerichteten Position zu halten. Nach dem Ausrichten wird der Dorn 56 nach unten bewegt, damit der Transporttisch 12 den nächsten Transportschritt ausführen kann.

Wenngleich vorstehend die Wendevorrichtung lediglich im Zusammenhang mit einer Siebdruckmaschine beschrieben wird, besteht selbstverständlich die Möglichkeit, auch ein anderes Dekorier- bzw. Druckverfahren anzuwenden.

## Patentansprüche

1. Verfahren zum Dekorieren eines flachen selbsttragenden Objektes (16), das sich in einer Aufnahme (14) einer Objekthalterung (15) befindet, **dadurch gekennzeichnet, daß** zum Wenden des in einer Ausgangsposition in der Aufnahme (14) befindlichen Objekts (16) dieses mittels einer ersten Schwenkeinrichtung (32), die am Objekt an einer ersten Seite desselben mittels Saugwirkung angreift und so das Objekt trägt, aus der Aufnahme (14) herausbewegt und unter Durchführung einer Schwenkbewegung in eine Zwischenposition bewegt wird und eine zweite Schwenkeinrichtung in eine Position gebracht wird, in welcher sie an der der ersten Seite abgekehrten zweiten Seite des in der Zwischenposition befindlichen Objektes mittels Saugwirkung an diesem angreift, und nach Lösen der Saugverbindung zwischen Objekt und erster Schwenkeinrichtung (32) das Objekt von der zweiten Schwenkeinrichtung (34) getragen und unter Durchführung einer zweiten Schwenkbewegung (34) in eine Endposition in der Aufnahme (14) einer Halterung (16) gebracht wird.

2. Verfahren nach Anspruch 1, **dadurch gekennzeichnet, daß** der Winkel, den das Objekt (16) in der Endposition mit der Horizontalen einschließt, gleich dem Winkel ist, welchen das Objekt (16) in der Ausgangsposition mit der Horizontalen einschließt.

3. Verfahren nach Anspruch 2, **dadurch gekennzeichnet, daß** das Objekt (16) in der Ausgangsposition und in der Endposition im wesentlichen horizontal angeordnet ist.

4. Verfahren nach Anspruch 1, **dadurch gekennzeichnet, daß** jede der beiden Schwenkeinrichtungen (32, 34) das Objekt (16) um jeweils die Hälfte der Gesamtschwenkung desselben zwischen Ausgangsposition und Endposition verschwenkt.

5. Verfahren nach Anspruch 1, **dadurch gekennzeichnet, daß** bei der Übergabe des Objektes (16) von der ersten Schwenkeinrichtung (32) an die zweite Schwenkeinrichtung (34) das Objekt eine Position einnimmt, in welcher seine Hauptebene im wesentlichen senkrecht zu der Ebene verläuft, in welcher das Objekt in seiner Ausgangs- und/oder seiner Endposition angeordnet ist.

6. Verfahren nach Anspruch 1, **dadurch gekennzeichnet, daß** die Halterung (15a) mit der Aufnahme (14a) für das Objekt (16a) schrittweise entlang einer Transportbahn bewegt wird und das Objekt während des Wendevorganges um die Wegstrecke eines Schaltschrittes in Transportrichtung (20) vorbewegt wird.

7. Verfahren nach Anspruch 6, **dadurch gekennzeichnet, daß** die Halterung (15a) für das Objekt (16a) während des Wendens desselben aus der Position, in welcher das Objekt (16a) aus der Aufnahme (14a) dieser Halterung (15a) herausgenommen worden war, in eine Position bewegt wird, in welcher das Objekt nach dem Wenden wieder in die Aufnahme (14a) der Halterung (15a) eingelegt wird.

8. Verfahren nach Anspruch 1, **dadurch gekennzeichnet, daß** die Halterung für das Objekt entlang einer Transportbahn schrittweise vorbewegt wird und die Wendeeinrichtung entlang dieser Transportbahn während des Wendens des Objektes vorzugsweise um einen Schaltschritt bewegt wird.

9. Verfahren nach Anspruch 1, **dadurch gekennzeichnet, daß** das zu wendende Objekt (16) durch die erste Schwenkeinrichtung (32) zunächst mittels einer im wesentlichen linearen Bewegung aus der Aufnahme (14) herausgenommen und alsdann verschwenkt in eine Zwischenposition gebracht wird, in welcher das Objekt (16) von der zweiten Schwenkeinrichtung (34) übernommen wird, und nach Wirksamwerden des Unterdruckes der zweiten Schwenkeinrichtung (34) an der zweiten Seite des Objektes der auf die erste Seite von der ersten Schwenkeinrichtung (32) einwirkende Unterdruck soweit reduziert wird, daß das Objekt durch eine Bewegung der zweiten Schwenkeinrichtung (34) aus der Zwischenposition enfernt wird und eine Schwenkbewegung ausführt, durch welche das Wenden des Objektes abgeschlossen wird, worauf das Objekt im Zuge einer im wesentlichen linearen Bewegung in eine Endposition in der Aufnahme einer Halterung bewegt wird.

10. Verfahren nach Anspruch 1, **dadurch gekennzeichnet, daß** die beiden Schwenkeinrichtungen (32, 34) wenigstens über Teile eines Arbeitszyklus' spiegelbildlich synchron bewegt werden.

11. Verfahren nach Anspruch 1, **dadurch gekennzeichnet, daß** beide Schwenkeinrichtungen (32, 34) gemeinsam angetrieben werden.

12. Verfahren nach Anspruch 1, **dadurch gekennzeichnet, daß** das Objekt (16) durch die erste Schwenkeinheit (32) zu dieser ausgerichtet wird, wenn es von der ersten Schwenkeinrichtung (32) übernommen wird.

13. Verfahren nach Anspruch 12, **dadurch gekennzeichnet, daß** das Objekt (16) durch Formschluß mit der ersten Schwenkeinheit (32) zu dieser ausgerichtet bleibt, bis es von der zweiten Schwenkeinrichtung (34) übernommen wird.

14. Verfahren nach Anspruch 1, **dadurch gekennzeichnet, daß** während des Ablegens und/oder nach dem Ablegen des gewendeten Objektes in der Aufnahme (14) der Halterung (15) das Objekt ausgerichtet wird.

15. Verfahren nach Anspruch 9, **dadurch gekennzeichnet, daß** Schwenkbewegungen und Linearbewegungen zumindest teilweise gleichzeitig durchgeführt werden.

16. Vorrichtung zum Dekorieren eines flachen selbsttragenden Objektes (16) mit einer Objekthalterung (15), die mit einer Aufnahme (14) für das Objekt versehen ist, **dadurch gekennzeichnet, daß** eine Wendevorrichtung (31) vorgesehen ist, die eine erste und eine zweite Schwenkeinrichtung (32, 34) aufweist, von denen jede mit einer Saugeinrichtung versehen ist und jeweils zwischen einer einer Aufnahme (14) für das Objekt (16) zugeordneten Position und einer Zwischenposition bewegbar und derart schwenkbar angebracht ist, daß das mittels der Saugeinrichtung (36, 38) von der jeweiligen Schwenkeinrichtung (32, 34) getragene Objekt (16) gegenüber der Ebene, in welcher es sich in einer Aufnahme erstreckt, aufeinanderfolgend von erster und zweiter Schwenkeinrichtung (32, 34) verschwenkt wird, wobei beide Schwenkeinrichtungen in der Zwischenposition einander gegenüberliegend derart angeordnet sind, daß das Objekt durch entsprechende Steuerung der Saugeinrichtungen von der ersten Schwenkeinrichtung an die zweite Schwenkeinrichtung übergeben wird.

17. Vorrichtung nach Anspruch 16, **dadurch gekennzeichnet, daß** jede Schwenkeinrichtung (32, 34) einen Arm (33, 35) aufweist, der linear verschiebbar an einem rotierbaren Tragelement (70) angebracht ist und an seinem freien Ende wenigstens eine Saugöffnung aufweist.

18. Vorrichtung nach Anspruch 16, **dadurch gekennzeichnet, daß** die beiden vorzugsweise symmetrisch angeordneten Schwenkeinrichtungen (32, 34) jeweils zwischen einer Position, in welcher die Hauptebene des von ihnen getragenen Objektes im wesentlichen horizontal verläuft, und einer Position, in welcher die Hauptebene des Objektes (16) im wesentlichen vertikal verläuft, bewegbar sind.

19. Vorrichtung nach Anspruch 16, **dadurch gekennzeichnet, daß** die die Aufnahme (14) aufweisende Halterung (15) Teil eines Transportmittels für das Objekt (16) ist, welches entlang einer Bewegungsbahn bewegbar ist.

20. Vorrichtung nach Anspruch 19, **dadurch gekennzeichnet, daß** die Position, in welcher das Objekt (16) von der ersten Schwenkeinrichtung (32) aus einer Aufnahme (14) aufgenommen wird, nicht identisch ist mit der Position, in welcher das Objekt (16) von der zweiten Schwenkeinrichtung (34) in einer Aufnahme (14) abgelegt wird.

21. Vorrichtung nach Anspruch 20, **dadurch gekennzeichnet, daß** die Halterung (15a) mit der Aufnahme (14a), aus welcher das Objekt (16a) durch die erste Schwenkeinrichtung (32) herausbewegt wird, während des Wendens des Objektes in eine zweite Position bewegt wird derart, daß das gewendete Objekt (16a) in derselben Aufnahme (14a) abgelegt werden kann.

22. Vorrichtung nach Anspruch 16, **dadurch gekennzeichnet, daß** beide Schwenkeinrichtungen (32, 34) einen gemeinsamen Antrieb aufweisen.

23. Vorrichtung nach Anspruch 16, **dadurch gekennzeichnet, daß** die erste Schwenkeinheit (32) mit einem Dorn (39) versehen ist, der mit einer entsprechend dimensionierten Öffnung im Objekt (16) zum Ausrichten desselben zusammenwirkt.

24. Vorrichtung nach Anspruch 16, **dadurch gekennzeichnet, daß** der das gewendete Objekt jeweils aufnehmenden Aufnahme (14a) ein Mittel (56) zum Ausrichten des Objektes zugeordnet ist.

25. Vorrichtung nach Anspruch 16, **dadurch gekennzeichnet, daß** das Mittel zum Ausrichten des Objektes (16) als in Richtung seiner Längsachse bewegbarer Dorn (56) ausgebildet ist, der zum Zwecke der Ausrichtung mit einer entsprechenden Öffnung im Objekt zusammenwirkt.

26. Vorrichtung nach Anspruch 25, **dadurch gekennzeichnet, daß** der Dorn (56) am Maschinenrahmen angebracht ist.

27. Vorrichtung nach Anspruch 23 und 24, **dadurch gekennzeichnet, daß** die Schwenkeinheit (36) mit einer Ausnehmung (97) für den Eingriff des Dornes (39, 56) versehen ist.

28. Vorrichtung nach Anspruch 24, **dadurch gekennzeichnet, daß** der Antrieb für das Mittel (56) zum Ausrichten des Objektes vom Antrieb für die Schwenkeinrichtungen (32, 34) abgeleitet ist.

29. Vorrichtung nach Anspruch 16, **dadurch gekennzeichnet, daß** der Schwenkarm (33, 35) an einem rotierbaren Tragelement (70) unter Zwischenschaltung einer Linearführung (82, 83) angebracht ist.

30. Vorrichtung nach Anspruch 29, **dadurch gekennzeichnet, daß** der Schwenkarm (33, 35) über eine Kurbelstange (76) mit einem rotierbaren Antriebsmittel (66) verbunden ist, welches die linearen Bewegungen des Schwenkarmes (33, 35) bewirkt.

## Claims

1. Method for decorating a flat self-supporting object (16) which is located in a receptacle (14) of an object holder (15), **characterised in that**, in order to turn over the object (16) located in a starting position in the receptacle (14), this object is moved out of the receptacle (14) by means of a first pivot device (32), which acts on the object on a first side thereof by means of a suction action and thus bears the object, and moved into an intermediate position while executing a pivotal movement, and a second pivot device is brought into a position in which it acts on the second side, remote from the first side, of the object located in the intermediate position by means of a suction action, and, after releasing the suction connection between the object and the first pivot device (32), the object is borne by the second pivot device (34) and brought into an end position in the receptacle (14) of a holder (16) while executing a second pivotal movement (34).

2. Method according to Claim 1, **characterised in that** the angle which the object (16) forms with the horizontal in the end position is equal to the angle which the object (16) forms with the horizontal in the starting position.

3. Method according to Claim 2, **characterised in that** the object (16) is disposed substantially horizontally in the starting position and in the end position.

4. Method according to Claim 1, **characterised in that** each of the two pivot devices (32, 34) in each case pivot the object (16) through half of the overall pivotal movement of the latter between the starting position and the end position.

5. Method according to Claim 1, **characterised in that**, when the object (16) is transferred from the first pivot device (32) to the second pivot device (34), the object takes up a position in which its principal plane extends substantially perpendicularly to the plane in which the object is disposed in its starting and/or its end position.

6. Method according to Claim 1, **characterised in that** the holder (15a) with the receptacle (14a) for the object (16a) is moved stepwise along a transport path, and the object is advanced in the transport direction (20) by the distance of one indexing step while being turned over.

7. Method according to Claim 6, **characterised in that** the holder (15a) for the object (16a) is moved while the latter is turned over from the position in which the object (16a) was removed from the receptacle (14a) of this holder (15a) into a position in which the object is replaced in the receptacle (14a) of the holder (15a) after being turned over.

8. Method according to Claim 1, **characterised in that** the holder for the object is advanced stepwise along a transport path, and the turnover device is moved along this transport path, preferably by one indexing step, while the object is turned over.

9. Method according to Claim 1, **characterised in that** the first pivot device (32) firstly removes the object (16) which is to be turned over from the receptacle (14) by means of a substantially linear movement and afterwards pivots it into an intermediate position in which the object (16) is taken over by the second pivot device (34), and, after the negative pressure of the second pivot device (34) has become operative on the second side of the object, the negative pressure acting on the first side from the first pivot device (32) is reduced to an extent such that the object is removed from the intermediate position by a movement of the second pivot device (34) and executes a pivotal movement through which the turnover of the object is completed, whereupon the object is moved in the course of a substantially linear movement into an end position in the receptacle of a holder.

10. Method according to Claim 1, **characterised in that** the two pivot devices (32, 34) are moved synchronously in mirror-inverted fashion at least over parts of a working cycle.

11. Method according to Claim 1, **characterised in that** the two pivot devices (32, 34) are jointly driven.

12. Method according to Claim 1, **characterised in that** the object (16) is oriented by the first pivot unit (32) relative to the latter when it is taken over by the first pivot device (32).

13. Method according to Claim 12, **characterised in that** the object (16) remains oriented relative to the first pivot unit (32) through a positive engagement with the latter until it is taken over by the second pivot device (34).

14. Method according to Claim 1, **characterised in that** the turned object is oriented while being deposited and/or after being deposited in the receptacle (14) of the holder (15).

15. Method according to Claim 9, **characterised in that** pivotal movements and linear movements are executed simultaneously, at least in part.

16. Apparatus for decorating a flat self-supporting object (16) with an object holder (15) which is provided with a receptacle (14) for the object, **characterised in that** a turnover apparatus (31) is provided, which apparatus comprises a first and a second pivot device (32, 34), each of which is provided with a suction device and in each case can be moved between a position associated with a receptacle (14) for the object (16) and an intermediate position and is pivotably mounted such that the object (16) borne by the respective pivot device (32, 34) by means of the suction device (36, 38) is pivoted by the first and the second pivot device (32, 34) in succession with respect to the plane in which it extends in a receptacle, wherein the two pivot devices are disposed opposite one another in the intermediate position such that the object is transferred from the first pivot device to the second pivot device by appropriately controlling the suction devices.

17. Apparatus according to Claim 16, **characterised in that** each pivot device (32, 34) comprises an arm (33, 35) which is mounted so as to be linearly displaceable on a rotatable carrier element (70) and comprises at least one suction opening at its free end.

18. Apparatus according to Claim 16, **characterised in that** the two pivot devices (32, 34), which are preferably disposed symmetrically, can in each case be moved between a position in which the principal plane of the object borne by them extends substantially horizontally and a position in which the principal plane of the object (16) extends substantially vertically.

19. Apparatus according to Claim 16, **characterised in that** the holder (15) comprising the receptacle (14) is part of a transport means for the object (16) which can be moved along a path of movement.

20. Apparatus according to Claim 19, **characterised in that** the position in which the object (16) is taken up from a receptacle (14) by the first pivot device (32) is not identical with the position in which the object (16) is deposited in a receptacle (14) by the second pivot device (34).

21. Apparatus according to Claim 20, **characterised in that** the holder (15a) with the receptacle (14a), out of which the object (16a) is moved by the first pivot device (32), is moved while turning over the object into a second position such that the turned object (16a) can be deposited in the same receptacle (14a).

22. Apparatus according to Claim 16, **characterised in that** the two pivot devices (32, 34) have a common drive.

23. Apparatus according to Claim 16, **characterised in that** the first pivot unit (32) is provided with a mandrel (39) which co-operates with a correspondingly dimensioned opening in the object (16) for orienting the latter.

24. Apparatus according to Claim 16, **characterised in that** a means (56) for orienting the object is associated with the receptacle (14a) in each case holding the turned object.

25. Apparatus according to Claim 16, **characterised in that** the means for orienting the object (16) is formed as a mandrel (56) which can be moved in the direction of its longitudinal axis and which co-operates with a corresponding opening in the object for orientation purposes.

26. Apparatus according to Claim 25, **characterised in that** the mandrel (56) is mounted on the machine frame.

27. Apparatus according to Claims 23 and 24, **characterised in that** the pivot unit (36) is provided with a recess (97) for the engagement of the mandrel (39, 56).

28. Apparatus according to Claim 24, **characterised in that** the drive for the means (56) for orienting the object is derived from the drive for the pivot devices (32, 34).

29. Apparatus according to Claim 16, **characterised in that** the pivot arm (33, 35) is mounted on a rotatable carrier element (70) with the interposition of a linear guide (82, 83).

30. Apparatus according to Claim 29, **characterised in that** the pivot arm (33, 35) is connected via a connecting rod (76) to a rotatable drive means (66) which effects the linear movements of the pivot arm (33, 35).

## Revendications

1. Procédé pour décorer un objet (16) plat autoportant, se trouvant dans un logement (14) d'un support (15) réservé à l'objet, **caractérisé en ce que**, pour orienter l'objet (16) placé en position initiale dans le logement (14), ledit objet est sorti du logement (14) au moyen d'un premier dispositif de pivotement (32) saisissant, par effet d'aspiration, l'objet au niveau d'un premier côté et le portant ainsi, est amené dans une position intermédiaire sous l'action d'un mouvement de pivotement, **en ce qu'**un deuxième dispositif de pivotement est placé dans une position dans laquelle il saisit, par effet d'aspiration, l'objet se trouvant en position intermédiaire au niveau de son deuxième côté distant du premier côté, et **en ce qu'**après relâchement de la liaison par aspiration entre l'objet et le premier dispositif de pivotement (32), l'objet est porté par le deuxième dispositif de pivotement (34) et est placé en position finale dans le logement (14) d'un support (15), sous l'action d'un deuxième mouvement de pivotement (34).

2. Procédé selon la revendication 1, **caractérisé en ce que** l'angle défini par l'objet (16) en position finale avec les horizontales, est identique à l'angle défini par l'objet (16) en position initiale avec les horizontales.

3. Procédé selon la revendication 2, **caractérisé en ce que** l'objet (16) est disposé essentiellement horizontalement en position initiale et en position finale.

4. Procédé selon la revendication 1, **caractérisé en ce que** chacun des deux dispositifs de pivotement (32, 34) pivote l'objet (16) à chaque fois de la moitié du pivotement total de celui-ci entre la position initiale et la position finale.

5. Procédé selon la revendication 1, **caractérisé en ce qu'**à l'occasion du transfert de l'objet (16) du premier dispositif de pivotement (32) au deuxième dispositif de pivotement (34), l'objet adopte une position dans laquelle son plan principal est essentiellement perpendiculaire au plan dans lequel est situé l'objet dans sa/ses position initiale et/ou position finale.

6. Procédé selon la revendication 1, **caractérisé en ce que** le support (15a) se déplace avec le logement (14a) réservé à l'objet (16a), pas à pas, le long d'un parcours et **en ce que** l'objet est préalablement déplacé, pendant l'orientation, de la distance d'un pas d'avance dans le sens de transport (20).

7. Procédé selon la revendication 6, **caractérisé en ce que** le support (15a) réservé à l'objet (16a) est, pendant l'orientation de celui-ci, amené de la position dans laquelle l'objet (16a) a été retiré du logement (14a) de ce support (15a), dans une position, dans laquelle l'objet est, après l'orientation, placé à nouveau dans le logement (14a) du support (15a).

8. Procédé selon la revendication 1, **caractérisé en ce que** le support réservé à l'objet se déplace préalablement pas à pas, le long d'un parcours et **en ce que** le sens de l'orientation se modifie pendant l'orientation de l'objet, le long de ce parcours, de préférence d'un pas d'avance.

9. Procédé selon la revendication 1, **caractérisé en ce que** l'objet (16) à orienter est en premier lieu extrait du logement (14) par le premier dispositif de pivotement (32) au moyen d'un mouvement essentiellement linéaire, puis est placé pivoté dans une position intermédiaire dans laquelle l'objet (16) est pris en charge par le deuxième dispositif de pivotement (34), et après effet de la dépression du deuxième dispositif de pivotement (34), au niveau du deuxième côté de l'objet, dans la mesure où la dépression agissant sur le premier côté du premier dispositif de pivotement (32) est arrêtée, **en ce que** l'objet est retiré de la position intermédiaire par un mouvement du deuxième dispositif de pivotement (34) et effectue un mouvement de pivotement, qui termine d'orienter l'objet, sur quoi l'objet est déplacé dans une position finale dans le logement d'un support au cours d'un mouvement essentiellement linéaire.

10. Procédé selon la revendication 1, **caractérisé en ce que** les deux dispositifs de pivotement (32, 34) ont un déplacement synchrone et inversé au moins sur des parties d'un cycle de travail.

11. Procédé selon la revendication 1, **caractérisé en ce que** les deux dispositifs de pivotement (32, 34) sont commandés conjointement.

12. Procédé selon la revendication 1, **caractérisé en ce que** l'objet (16) est aligné par la première unité de pivotement (32) à celle-ci, lorsqu'il est pris en charge par le premier dispositif de pivotement (32).

13. Procédé selon la revendication 12, **caractérisé en ce que** l'objet (16), avec la première unité de pivotement (32), reste aligné à celle-ci par emboîtement et ce, jusqu'à ce que le deuxième dispositif de pivotement (34) le prend en charge.

14. Procédé selon la revendication 1, **caractérisé en ce que** l'objet est aligné pendant le dépôt et/ou après le dépôt de l'objet orienté dans le logement (14) du support (15).

15. Procédé selon la revendication 9, **caractérisé en ce que** des mouvements de pivotement et des mouvements linéaires sont exécutés au moins partiellement en même temps.

16. Dispositif pour décorer un objet (16) plat autoportant, avec un support (15) réservé à l'objet, muni d'un logement (14) destiné à l'objet, **caractérisé en ce qu'**il est prévu un dispositif d'orientation (31) qui présente un premier et un deuxième dispositifs de pivotement (32, 34), chacun étant muni d'un dispositif d'aspiration, pouvant respectivement être déplacé entre une position affectée à un logement (14) destiné à l'objet (16) et une position intermédiaire et pouvant être placé de façon pivotante, de telle sorte que l'objet (16) porté au moyen du dispositif d'aspiration (36, 38) de chacun des dispositifs de pivotement (32, 34) est pivoté successivement par le premier et le deuxième dispositifs de pivotement (32, 34), et ce, face au plan dans lequel il s'étend dans un logement, sachant que les deux dispositifs de pivotement sont disposés, dans la position intermédiaire, l'un en face de l'autre, de telle sorte que l'objet est transféré par une commande appropriée des dispositifs d'aspiration du premier dispositif de pivotement au niveau du deuxième dispositif de pivotement.

17. Dispositif selon la revendication 16, **caractérisé en ce que** chaque dispositif de pivotement (32, 34) présente un bras (33, 35) qui, pouvant coulisser de façon linéaire, est placé au niveau d'un élément de support (70) tournant et qui présente au moins un orifice d'aspiration au niveau de son extrémité libre.

18. Dispositif selon la revendication 16, **caractérisé en ce que** les deux dispositifs de pivotement (32, 34), disposés de préférence symétriquement, peuvent respectivement se déplacer entre une position dans laquelle le plan principal de l'objet qu'ils portent est essentiellement horizontal, et une position dans laquelle le plan principal de l'objet (16) est essentiellement vertical.

19. Dispositif selon la revendication 16, **caractérisé en ce que** le support (15) présentant le logement (14) fait partie d'un moyen de transport destiné à l'objet (16), lequel est mobile le long d'un parcours.

20. Dispositif selon la revendication 19, **caractérisé en ce que** la position dans laquelle l'objet (16) est reçu par le premier dispositif de pivotement (32) d'un logement (14) est différente de celle dans laquelle l'objet (16) est déposé par le deuxième dispositif de pivotement (34) dans un logement (14).

21. Dispositif selon la revendication 20, **caractérisé en ce que** le support (15a), avec le logement (14a) d'où l'objet (16a) est retiré par le premier dispositif de pivotement (32), est amené dans une deuxième position pendant l'orientation de l'objet, de telle sorte que l'objet orienté (16a) peut être déposé dans le même logement (14a).

22. Dispositif selon la revendication 16, **caractérisé en ce que** les deux dispositifs de pivotement (32, 34) présentent une commande commune.

23. Dispositif selon la revendication 16, **caractérisé en ce que** la première unité de pivotement (32) est équipée d'un mandrin (39) qui concourt avec un orifice, dimensionné en fonction, dans l'objet (16) pour aligner celui-ci.

24. Dispositif selon la revendication 16, **caractérisé en ce qu'**un moyen (56) pour aligner l'objet est affecté au logement (14a) recevant respectivement l'objet orienté.

25. Dispositif selon la revendication 16, **caractérisé en ce que** le moyen pour aligner l'objet (16) est conçu en tant que mandrin (56) mobile dans le sens de son axe longitudinal et concourant avec un orifice, correspondant, dans l'objet pour alignement.

26. Dispositif selon la revendication 25, **caractérisé en ce que** le mandrin (56) est placé au niveau du bâti de la machine.

27. Dispositif selon la revendication 23 et la revendication 24, **caractérisé en ce que** l'unité de pivotement (32) est munie d'un évidement (97) pour préhension du mandrin (39, 56).

28. Dispositif selon la revendication 24, **caractérisé en ce que** la commande pour le moyen (56) destiné à aligner l'objet est dérivée de la commande réservée aux dispositifs de pivotement (32, 34).

29. Dispositif selon la revendication 16, **caractérisé en ce que** le bras orientable (33, 35) est placé au niveau d'un élément de support (70) tournant, sous l'intercalage d'une conduite linéaire (82, 83).

30. Dispositif selon la revendication 29, **caractérisé en ce que** le bras orientable (33, 35) est relié par l'intermédiaire d'une bielle (76) à un moyen de commande tournant (66) qui occasionne les mouvements linéaires du bras orientable (33, 35).
